# EUROPÄISCHE PATENTSCHRIFT

(11) **EP 0 965 016 B1**
(45) Veröffentlichungstag und Bekanntmachung des Hinweises auf die Patenterteilung: **25.09.2002**
(21) Anmeldenummer: 98906740.0
(22) Anmeldetag: 05.03.1998
(51) Int. Cl.: F16N 7/00

(54) **VORRICHTUNG ZUM REINIGEN UND SCHMIEREN VON ANTRIEBSKETTEN**
DEVICE FOR CLEANING AND LUBRICATING DRIVE CHAINS
DISPOSITIF POUR NETTOYER ET LUBRIFIER DES CHAINES DE TRANSMISSION

(30) Priorität: 07.03.1997 AT 38697
(43) Veröffentlichungstag der Anmeldung: 22.12.1999
(73) Patentinhaber: Pesl, Josef, 5091 Unken (AT)
(72) Erfinder: Pesl, Josef, 5091 Unken (AT)
(74) Vertreter: Babeluk, Michael, Dipl.-Ing. Mag.
(86) Internationale Anmeldenummer: AT9800053
(87) Internationale Veröffentlichungsnummer: WO98040662

(56) Entgegenhaltungen:
- DE-C- 921 132
- US-A- 4 783 186
- US-A- 5 020 637
- US-A- 5 213 180
- US-A- 5 360 084
- US-A- 5 484 038

## Beschreibung

Die vorliegende Erfindung betrifft eine Vorrichtung zum Reinigen und Schmieren von Antriebsketten gemäß dem Oberbegriff von Patentanspruch 1.

Die Lebensdauer der Antriebsketten von Motorrädern, Landmaschinen und dgl. hängt wesentlich von der Pflege und Reinigung während des Betriebs ab. Kleine Fremdkörper, wie etwa Sand od. dgl., die sich an den Gelenken der Antriebskette festsetzen, verringern die Lebensdauer beträchtlich. Daher ist eine regelmäßige Pflege und Reinigung der Antriebsketten wichtig. Mit bisher bekannten Vorrichtungen ist jedoch der Reinigungsvorgang mühsam und im allgemeinen mit einer großen Verschmutzung der Umgebung und der benachbarten Bauteile verbunden.

Aus der DE-A 38 39 076 ist eine Einrichtung zum Säubern und Trocknen von Ketten für Rennräder bekannt, die ein zweiteiliges Gehäuse besitzt, durch das die Kette hindurchgeführt wird. In dem Gehäuse sind Borstenräder angeordnet, die die Kette einerseits mechanisch reinigen und andererseits in den unteren Bereich des Gehäuses umlenken. In diesem unteren Bereich des Gehäuses ist eine Wanne ausgebildet, die ein Reinigungsmedium aufnehmen kann. Die Kette wird durch das Eintauchen in dieses Reinigungsmedium gesäubert. Das Umlenken der Kette erfordert je nach Kettenspannung eine relativ große Kraft, die von der Einrichtung aufgenommen werden muss. Weiters ist bei dieser bekannten Lösung nachteilig, dass sich der von der Kette abgelöste Schmutz in der Wanne ansammelt und teilweise wieder zurück auf die Kette gelangen kann.. Weiters wird gerade die Innenseite der Kette, deren Reinigung und Schmierung besonders kritisch ist, bei diesem Verfahren benachteiligt.

Weiters ist In der GB-A 20 597 eine Vorrichtung zum Reinigen und Schmieren von Fahrradketten offenbart. Die zu reinigende Kette wird dabei an einem Rädchen vorbeigeführt, das in eine Wanne eintaucht, in der ein Schmiermittel enthalten ist. Durch die Drehung dieses Rädchens wird das Schmiermittel auf die Kette aufgetragen. Die Reinigungswirkung einer solchen Vorrichtung ist jedoch äußerst beschränkt, da nur sehr grober Schmutz, der an der Kette anhaftet-, abgestreift werden kann.

Ferner ist aus der EP-A 0 599 087 eine Vorrichtung zum Schmieren und Reinigen von Ketten und Schienen bekannt. Dabei sind mehrere schuhartige Module hintereinander geschaltet, die die zu reinigende Kette an drei Seiten umgeben und die Bürsten und Reinigungsdüsen aufweisen. Da dieses System nach unten hin offen ist, kann eine Verwendung nur in einer Werkstatt od. dgl. erfolgen, in der die erhebliche Schmutzbelastung der Umgebung tolerierbar ist. Eine ähnliche Vorrichtung ist in der WO 86/05153 beschrieben.

Die US 5 360 084 A beschreibt eine Reinigungs- und Schmiereinrichtung für Antriebsketten, die die Antriebskette an ihren beiden Seiten und oben umschließt. An der Unterseite ist diese Vorrichtung offen. Daher rinnen die überschüssigen Reinigungs- und Schmiermittel unkontrolliert nach unten ab, was die oben beschriebenen Probleme verursacht.

Aufgabe der vorliegenden Erfindung ist es, eine Vorrichtung der oben beschriebenen Art so weiterzubilden, dass eine zuverlässige und wirksame Reinigung von Antriebsketten möglich ist und dass diese Reinigung mit geringem Aufwand weitgehend ohne Schmutzbelastung der Umgebung durchführbar ist.

Die obige Aufgabe wird durch eine Ausbildung erreicht, die die Merkmale des kennzeichnenden Teils von Patentanspruch 1 aufweist.

Wesentlich an der vorliegenden Erfindung ist, dass die Reinigung in einem allseits geschlossenen Gehäuse stattfindet, wobei das Reinigungsmedium nur einmal mit der Kette in Kontakt kommt und darnach gesammelt und abgezogen wird. Das Aufbringen erfolgt dabei durch Düsen, die auf die Antriebskette gerichtet sind, um die Wirksamkeit der Reinigung zu steigern. Das oben Gesagte gilt In analoger Weise auch für ein Schmiermittel, das nach der Reinigung der Antriebskette aufgebracht werden kann. Hier ist es besonders wesentlich, dass kein Schmiermittel unkontrolliert aus der Vorrichtung in die Umgebung austreten kann. Daher ist die erfindungsgemäße Vorrichtung auch dort verwendbar, wo jegliche Umweltbelastung unzulässig ist.

Bevorzugte Ausführungsvarianten der Erfindung sind in den Unteransprüchen angegeben. Durch die Abdichtung der Eintritts- und Austrittsstellen der Antriebskette durch Gummilippen od. dgl. kann sichergestellt werden, dass auch bei unterschiedlichen Dimensionen von Antriebsketten an diesen Stellen keine Leckage auftritt.

Besonders günstig ist es, wenn die Düsen an beiden Seiten von Bürsten umgeben sind. Die stromaufwärtigen Bürsten haben dabei die Aufgabe einer mechanischen Vorreinigung, während die stromabwärtigen Bürsten einerseits ein weiteres Abstreifen der durch das Reinigungsmedium zwar gelockerten, aber unter Umständen noch nicht vollständig entfernten Schmutzpartikel ermöglichen und andererseits das anhaftende Reinigungsmedium oder überschüssiges Schmiermittel abstreifen.

Ein besonders einfacher Aufbau der Vorrichtung wird dadurch erreicht, dass in dem Gehäuse Halteelemente angeordnet sind, die sowohl Düsen aufweisen als auch Bürsten tragen.

In der Folge wird die vorliegende Erfindung anhand der In den Figuren dargestellten Ausführungsbeispiele näher erläutert. Es zeigen:
- Fig.1: einen Teil einer Antriebskette eines Motorrades mit der erfindungsgemäßen Vorrichtung,
- Fig. 2: einen schematischen Schnitt durch die Vorrichtung,
- Fig. 3: eine seitliche Ansicht einer weiteren Ausführungsvariante der Erfindung,
- Fig. 4: einen Schnitt nach der Linie IV-IV in Fig. 3,
- Fig. 5: eine Ansicht der unteren Gehäusehälfte von oben,
- Fig. 6: eine weitere Ausführungsvariante der Erfindung in einem Schnitt nach der Linie VI-VI in Fig. 7 und die
- Fig. 7: einen Schnitt nach der Linie VII-VII in Fig. 6.

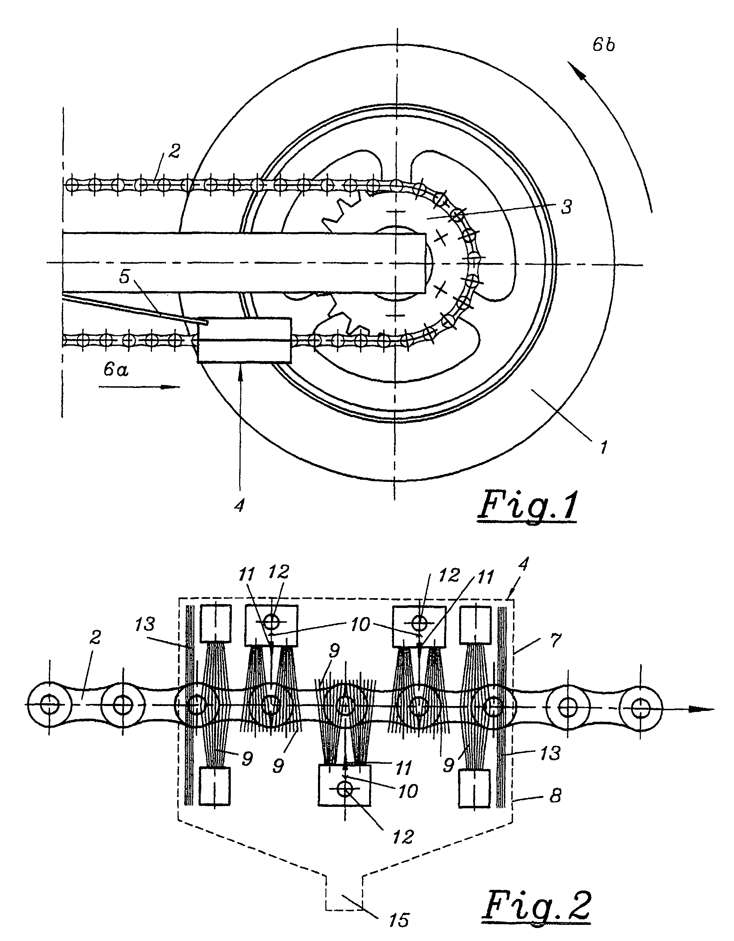

In der Fig. 1 ist das Hinterrad 1 eines Motorrades schematisch dargestellt. Das Hinterrad 1 wird über eine Antriebskette 2 angetrieben, die in an sich bekannter Weise um ein Kettenrad 3 geschlungen ist. Am unteren Kettentrum ist die erfindungsgemäße Vorrichtung 4 angeordnet, die mit einem schematisch dargestellten Haltebügel 5 an einem festen Konstruktionsteil des Motorrades befestigt ist. Während des Reinigungs- und Schmiervorganges wird die Antriebskette 2 in der Richtung des Pfeils 6a bewegt, so dass sich das Hinterrad 1 in der Richtung des Pfeils 6b dreht. Das Motorrad wird während des Reinigungs- oder Schmiervorganges aufgebockt oder am Hauptständer aufgestellt, so dass die Drehung des Hinterrades 1 nicht behindert ist.

Aus der Fig. 2 ist der grundsätzliche Aufbau der erfindungsgemäßen Vorrichtung ersichtlich. Die Gehäusehälften 7, 8 der erfindungsgemäßen Vorrichtung 4 sind in der Fig. 2 mit unterbrochenen Linien angedeutet. Im Inneren der Gehäusehälften 7, 8 sind Bürsten 9 angeordnet, die die Antriebskette 2 aus verschiedenen Richtungen abstreifen. Düsen sind schematisch mit 10 angedeutet, um ein Reinigungsmittel oder Schmiermittel in Richtung der Pfeile 11 auf die Kette zu sprühen. Das Reinigungs- oder Schmiermittel wird über Bohrungen 12 zu den Düsen 10 geführt. An den Durchtrittsstellen der Kette 2 sind Gummilippen 13 angeordnet, um die Vorrichtung auch In diesen Bereichen abzudichten. Die untere Gehäusehälfte 8 ist im unteren Bereich 14 trichterförmig ausgebildet und mit einer Abflussöffnung 15 versehen.

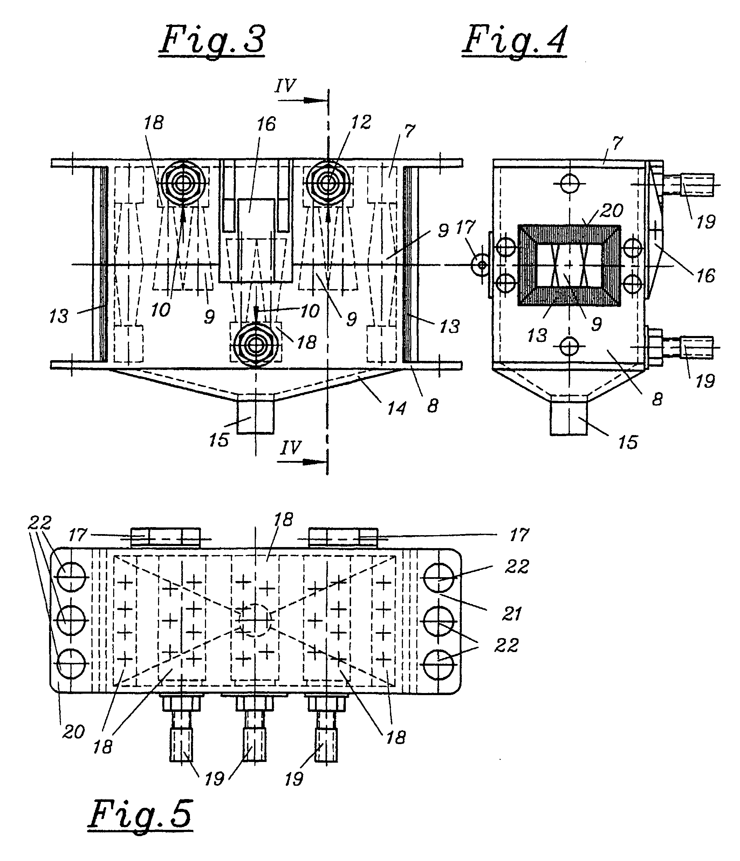

Aus der Darstellung der Fig. 3 ist ersichtlich, dass die beiden Gehäusehälften 7 und 8 durch einen Schnappverschluss 16 miteinander verbunden sind. Wie In der Fig. 4 dargestellt ist, sind an der gegenüberliegenden Seite des Schnappverschlusses 16 Scharniere 17 angebracht, um die Gehäusehälften 7, 8 auseinander klappen zu können. Die Bürsten 9 und Düsen 10 sind jeweils gemeinsam In Halteelementen 18 angeordnet, die sich im wesentlichen quer zur Axialrichtung der Vorrichtung erstrecken. Die Bohrungen 12 in den Halteelementen 18 stehen mit Anschlussstücken 19 in Verbindung, auf die Schläuche aufgesteckt werden können, um ein Reinigungs- oder Schmiermittel in das Innere der Vorrichtung 4 einzubringen. Dabei kann beispielsweise eine einfache Sprühflasche verwendet werden, es kann jedoch auch über eine Spritzpistole mit Druckluft das entsprechende Medium zugeführt werden. Die Bürsten 9 sind beidseits der Düsen 10 angeordnet, um jeweils überschüssiges Reinigungs- oder Schmiermittel von der Kette abzustreifen.

Aus der Fig. 4 ist der genaue Aufbau der Gummilippen 13 ersichtlich. Von jeder der Seiten einer rechteckigen Ausnehmung 20 In den Gehäusehälften 7 und 8 ragt ein Blatt der Gummilippe 13 vor. Die Abmessungen der Gummilippen 13 sind dabei so gewählt, dass die verbleibende Öffnung kleiner als der Querschnitt der Antriebskette ist.

Aus der Fig. 5 ist ersichtlich, dass in den seitlichen Bereichen der Vorrichtung Flansche 20, 21 vorgesehen sind, die mit Bohrungen 22 versehen sind. Die Bohrungen 22 dienen zum Einhängen eines Drahtbügels od. dgl., der in der Fig. 1 schematisch mit 5 dargestellt ist. Damit wird sichergestellt, dass auch bei Bewegung der Antriebskette 2 die Vorrichtung 4 an dem vorgesehenen Platz verbleibt.

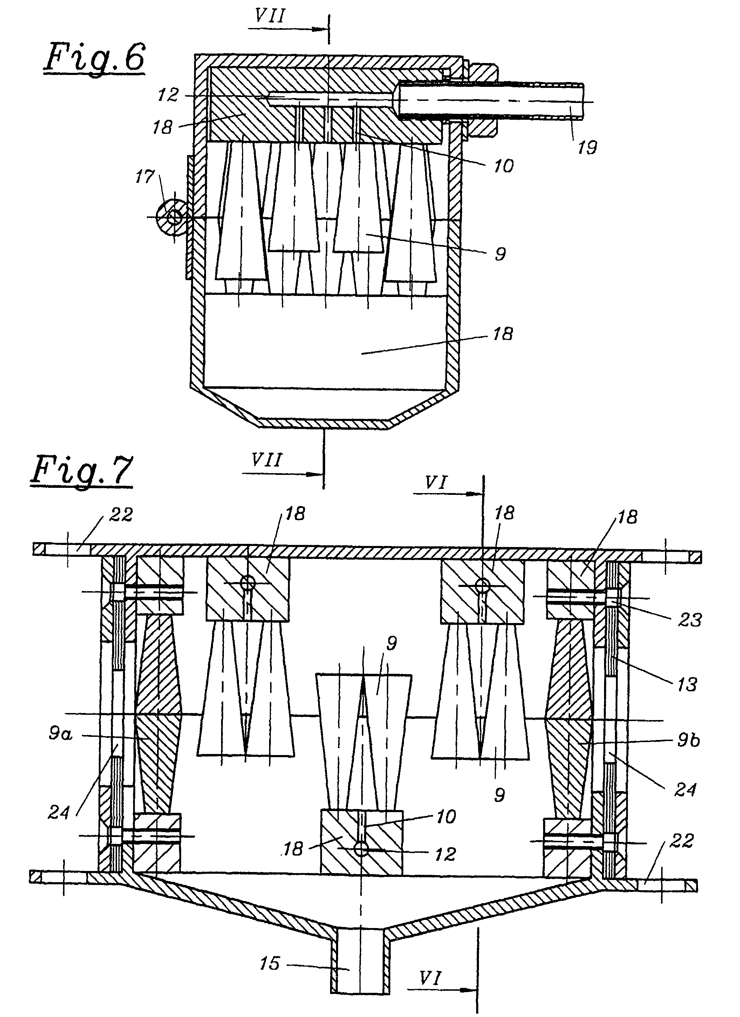

In den Fig. 6 und 7 ist eine geringfügig abgeänderte Ausführungsvariante der Erfindung detailliert dargestellt. Die entsprechenden Bauteile sind mit den gleichen Bezugszeichen bezeichnet, wie bei der oben beschriebenen Ausführungsvariante und eine detaillierte Beschreibung ist weggelassen. Bei dieser Ausführungsvariante sind die Bürsten 9 im mittleren Bereich kürzer ausgeführt als Im seitlichen Bereich. In jedem Halteelement 18 sind drei Düsen 10 angeordnet, um eine optimale Verteilung des Reinigungs- oder Schmiermittels zu gewährleisten. Welters ist aus der Fig. 7 ersichtlich, dass die Gummilippen 13 über Verschraubungen 23 mit den Halteelementen 18 der äußersten Bürsten 9a bzw. 9b verschraubt sind. Diese Bürsten 9a und 9b sind dichter ausgeführt als die mittleren Bürsten 9, um eine zusätzliche Abdichtungswirkung gegenüber den Öffnungen 24 für den Durchtritt der Antriebskette zu gewährleisten.

Die vorliegende Erfindung ermöglicht es, die Antriebskette 2 eines Motorrades in wirksamer Weise zu reinigen und zu schmieren. Durch die besondere Ausbildung der Vorrichtung kann eine Verschmutzung der Umgebung dabei praktisch vollständig verhindert werden. Weiters ist der Verbrauch an Reinigungs- und Schmiermitteln im Vergleich zu alternativen Lösungen sehr gering. Die erfindungsgemäße Vorrichtung ist dabei besonders leicht und einfach anwendbar und benutzerfreundlich.

## Patentansprüche

1. Vorrichtung zum Reinigen und Schmieren von Antriebsketten (2), Insbesondere von Motorrädern, mit einem die Antriebskette (2) allseitig umschließenden Gehäuse, das aus zwei miteinander verbindbaren Gehäusehälften (7, 8) besteht, und das Öffnungen zum Hindurchtreten der Antriebskette (2) aufweist, mit Bürsten (9), die in dem Gehäuse angebracht sind, um die Antriebskette (2) abzustreifen, und mit nach innen gerichteten Düsen (10), die mit Anschlüssen (19) auf der Außenseite des Gehäuses in Verbindung stehen, **dadurch gekennzeichnet, dass** das Gehäuse einen trichterförmigen Bereich mit einer Abflussöffnung (15) aufweist, die zum Abfließen der in die Vorrichtung eingedüsten Medien ausgebildet ist.

2. Vorrichtung nach Anspruch 1, **dadurch gekennzeichnet, dass** die Öffnungen des Gehäuses zum Hindurchtreten der Antriebskette (2) durch Gummilippen (13) verschlossen sind.

3. Vorrichtung nach einem der Ansprüche 1 oder 2, **dadurch gekennzeichnet, dass** die Düsen (10) in Bewegungsrichtung der Antriebskette (2) beidseits von Bürsten (9) umgeben sind.

4. Vorrichtung nach einem der Ansprüche 1 bis 3, **dadurch gekennzeichnet, dass** das Gehäuse aus einer oberen und aus einer unteren Gehäusehälfte (7, 8) besteht, und dass an beiden Gehäusehälften (7, 8) Bürsten (9) angebracht sind.

5. Vorrichtung nach einem der Ansprüche 1 bis 4, **dadurch gekennzeichnet, dass** Düsen (10) sowohl auf die Oberseite als auch auf die Unterseite der Antriebskette (2) gerichtet sind.

6. Vorrichtung nach einem der Ansprüche 1 bis 5, **dadurch gekennzeichnet, dass** in dem Gehäuse Halteelemente (18) angeordnet sind, die sowohl Düsen (10) aufweisen als auch Bürsten (9) tragen.

## Claims

1. An apparatus for cleaning and lubricating drive chains (2), in particular of motorcycles, with a housing enclosing the drive chain (2) on all sides and consisting of two mutually connectable halves (7, 8) and comprising openings for allowing the drive chain (2) to pass through provided with brushes (9) which are attached in the housing to wipe off the drive chain (2) and with inwardly facing nozzles (10) which are in connection with connections (19) on the outside of the housing, **characterized in that** the housing comprises a funnel-shaped zone with a drainage opening (15) which is arranged for bleeding off the media injected into the apparatus.

2. An apparatus according to claim 1, **characterized in that** the openings of the housing for passing through the drive chain (2) are closed by rubber lips (13).

3. An apparatus according to one of the claims 1 or 2, **characterized in that** the nozzles (10) are encompassed by brushes (9) on either side in the direction of movement of the drive chain (2).

4. An apparatus according to one of the claims 1 to 3, **characterized in that** the housing consists of an upper and a lower half (7, 8) of the housing and that brushes (9) are attached on both halves (7, 8) of the housing.

5. An apparatus according to one of the claims 1 to 4, **characterized in that** nozzles (10) are directed both against the upper side as well as the lower side of the drive chain (2).

6. An apparatus according to one of the claims 1 to 5, **characterized in that** fixing elements (18) are arranged which are both provided with nozzles (10) as well as hold brushes (9).

## Revendications

1. Dispositif pour nettoyer et graisser des chaînes d'entraînement (2) et, en particulier, des chaînes d'entraînement de motocyclette, comprenant une enceinte qui entoure la chaîne d'entraînement (2) sur tous les côtés, qui est constituée de deux moitiés (7, 8) d'enceinte que l'on peut fixer l'une avec l'autre, qui a des ouvertures pour permettre le passage traversant de la chaîne d'entraînement (2) et qui est équipée de brosses (9) disposées dans l'enceinte pour décrasser la chaîne d'entraînement (2) et de buses (10) dirigées vers l'intérieur et en communication avec des raccords (19) disposés sur le côté externe de l'enceinte, **caractérisé en ce que** l'enceinte présente une région en forme d'entonnoir avec une ouverture d'évacuation (15), prévue pour évacuer le milieu injecté dans le dispositif.

2. Dispositif selon la revendication 1, **caractérisé en ce que** les ouvertures de l'enceinte pour le passage traversant de la chaîne d'entraînement (2) sont fermées par des lèvres en caoutchouc (13).

3. Dispositif selon l'une des revendications 1 et 2, **caractérisé en ce que** les buses (10) sont prises en sandwich des deux côtés dans la direction du mouvement de la chaîne d'entraînement (2) par des brosses (9).

4. Dispositif selon l'une des revendications 1 à 3, **caractérisé en ce que** l'enceinte est constituée par une moitié d'enceinte supérieure et une moitié d'enceinte inférieure (7, 8) et **en ce que** des brosses (9) sont disposées sur les deux moitiés (7, 8) de l'enceinte.

5. Dispositif selon l'une des revendications 1 à 4, **caractérisé en ce que** les buses (10) sont placées aussi bien sur le côté supérieur que sur le côté inférieur de la chaîne d'entraînement (2).

6. Dispositif selon l'une des revendications 1 à 5, **caractérisé en ce que** des éléments de support (18) sont disposés dans l'enceinte, qui simultanément présentent des buses (10) et portent des brosses (9).
